(19) **Europäisches Patentamt / European Patent Office / Office européen des brevets**

(11) **EP 1 725 315 B1**

(12) **FASCICULE DE BREVET EUROPEEN**

(45) Date de publication et mention
de la délivrance du brevet:
**23.01.2008 Bulletin 2008/04**

(21) Numéro de dépôt: **05716953.4**

(22) Date de dépôt: **08.03.2005**

(51) Int Cl.:
**B01D 33/19** *(2006.01)*

(86) Numéro de dépôt international:
**PCT/EP2005/051027**

(87) Numéro de publication internationale:
**WO 2005/097292 (20.10.2005 Gazette 2005/42)**

(54) **DISPOSITIF DE SUPPORT DE CHASSIS TOURNANT D'INSTALLATION DE FILTRATION**

VORRICHTUNG ZUR STÜTZUNG DES ROTATIONSRAHMENS EINER FILTRATIONSANLAGE

DEVICE FOR SUPPORTING THE ROTATING FRAME OF A FILTRATION INSTALLATION

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **10.03.2004 BE 200400133**

(43) Date de publication de la demande:
**29.11.2006 Bulletin 2006/48**

(73) Titulaire: **Prayon Technologies**
**4480 Engis (BE)**

(72) Inventeur: **KUROWSKI, Serge**
**B-4121 Neuville-en-Condroz (BE)**

(74) Mandataire: **Claeys, Pierre et al**
**Gevers & Vander Haeghen**
**Holidaystraat 5**
**1831 Diegem (BE)**

(56) Documents cités:
**US-A- 877 000**      **US-A- 2 188 840**

Printed by Jouve, 75001 PARIS (FR)

## Description

La présente invention est relative à un dispositif de support de châssis tournant d'installation de filtration à cellules de filtration disposées en carrousel, comprenant

- des galets de support qui présentent chacun un axe de pivotement et qui supportent le châssis tournant de manière à permettre une rotation de ce dernier autour d'un axe de rotation du carrousel, et
- par galet, un palier fixe qui supporte le galet de manière à permettre son pivotement, le palier comportant une première branche et une deuxième branche disposées de part et d'autre du galet pour le porter de manière à permettre son pivotement.

On connaît depuis longtemps déjà des dispositifs de filtration à cellules de filtration disposées en carrousel, qui sont en particulier en usage dans la production d'acide phosphorique, l'hydrométallurgie de cuivre, cobalt, zinc, uranium, etc., le lavage de charbon actif ou de phosphates, la filtration d'acides en général.

Les cellules de ces installations sont soutenues par un châssis tournant comportant généralement deux anneaux formés chacun de plusieurs rails agencés l'un derrière l'autre de manière circulaire, ces anneaux reposant sur des galets de support (voir notamment US-A-3.389.800).

Un grand nombre de galets sont nécessaires pour supporter le châssis qui à son tour supporte les cellules de filtration, et ces galets représentent donc des pièces de l'installation qui s'usent relativement vite et doivent donc être fréquemment remplacées. Il en résulte un coût important pour la maintenance de l'installation.

Plusieurs tentatives ont déjà été effectuées pour atteindre des conditions de roulement sans usure des galets. On peut notamment citer l'amélioration des matériaux formant le bandage des galets, la mise en oeuvre d'une bombure sur ces bandages ou encore la réalisation de galets coniques. Les résultats ainsi atteints s'avèrent toutefois encore insuffisants.

La présente invention a pour but de porter remède aux inconvénients cités, et donc de mettre au point un dispositif de support de châssis tournant qui permette de réduire l'usure des galets de support.

Pour résoudre ces problèmes, on a prévu, suivant l'invention, un dispositif de support de châssis tournant tel qu'indiqué au début, dans lequel, en fonction de forces appliquées sur le galet par le châssis tournant, la première branche passe d'un premier état de flexion à un deuxième état de flexion et inversement, indépendamment d'un état de flexion de la deuxième branche, et respectivement la deuxième branche passe d'un premier état de flexion à un deuxième état de flexion et inversement, indépendamment d'un état de flexion de la première branche. Lorsqu'un châssis tournant se met à tourne r, à la suite d'inégalités du rail du châssis tournant qui repose sur les galets de support ainsi qu'à la suite de la position différente de chacune des branches d'un palier par rapport à l'axe de rotation du carrousel, les branches d'un même palier sont soumises fréquemment et régulièrement à des forces inégales dirigées du haut vers le bas. Dans le cas de branches de palier rigides, il en résulte une surcharge des galets et donc une détérioration de ceux-ci. Suivant l'invention, les branch es des paliers présentent des capacités de flexion vis-à-vis des forces appliquées par le châssis tournant sur les galets. Donc, lorsque le châssis tournant est placé sur les galets de support, les branches de chaque palier passent à un premier état de flexion, normalement égal pour les deux branches. Lorsque le châssis se met à tourner, chaque branche peut passer à un deuxième état de flexion qui lui est propre, qui est indépendant de celui que présente l'autre branche, et qui pourra d'ailleurs varier en fonction des forces variables appliquées par le châssis sur chaque branche. Il en résulte donc une très grande souplesse dans le support des galets, ce qui ménage ceux-ci et permet de retarder largement leur remplacement.

Suivant une forme de réalisation de l'invention chacune des branches d'un palier présente une première extrémité fixée à une assise et une deuxième extrémité qui porte le galet et qui est située à une distance de l'assise, variable en fonction desdites forces appliquées sur le galet. Les branches de palier sont donc flexibles en soi. Avantageusement, chaque branche de palier peut présenter une forme générale de U couché dont ladite première extrémité et ladite deuxième extrémité se rapprochent ou s'écartent en fonction desdites forces appliquées sur le galet. Si, comme dans cet exemple, la branche devient flexible par sa conformation, elle peut aussi l'être par sa composition, par exemple par l'usage de matières élastiques ou flexibles, telles que certains aciers ou des matières thermoplastiques ou polymérisées appropriées.

Suivant une autre forme de réalisation de l'invention, chaque branche d'un palier comprend une première partie rigide qui porte l'axe de pivotement et une deuxième partie qui supporte ladite première partie de manière flexible sur une assise. On pourrait bien entendu aussi prévoir l'inverse, une première partie flexible portant l'axe de pivotement et une deuxième partie supportant la partie flexible de manière rigide sur une assise.

Suivant une forme avantageuse de réalisation, chaque branche de palier porte le galet de manière à permettre un déplacement vertical vers le bas de l'axe de pivotement de l'ordre de 2 mm. Avantageusement l'axe de pivotement du galet est horizontal dans le premier état de flexion des branches du palier et en ce que chaque branche de palier porte l'axe de pivotement du galet de manière à permettre un basculement de l'ordre de 2° hors de l'horizontalité.

D'autres formes de réalisation de l'invention sont indiquées dans les revendications annexées.

D'autres détails et particularités de l'invention ressortiront de la description donnée ci-après à titre non limitatif et avec référence aux dessins annexés.

Les figures 1 et 2 représentent une vue latérale et respectivement une vue en coupe, suivant la ligne 11-11 de la figure 1, d'une forme de réalisation de dispositif de support de galet suivant l'invention.

Les figures 4 et 5 représentent une vue latérale à partir du plan IV-IV de la figure 5 et respectivement une vue en coupe suivant la ligne V-V de la figure 4 d'une variante de réalisation suivant l'invention.

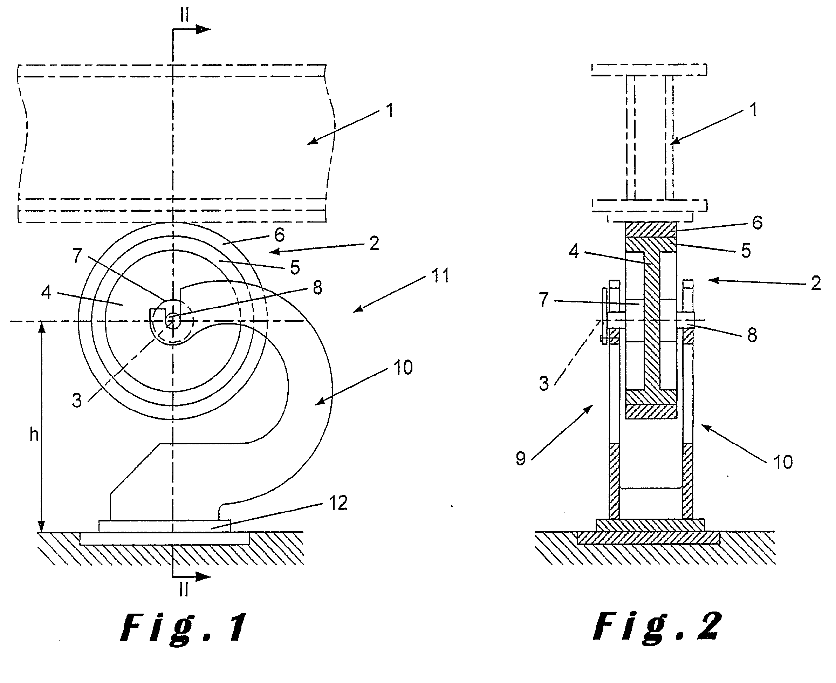

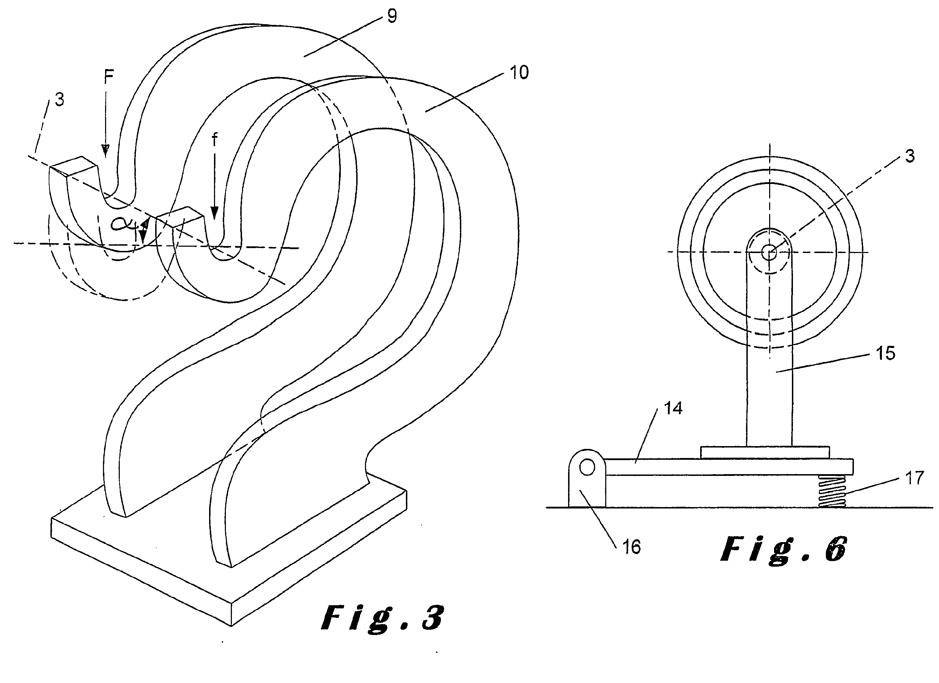

La figure 3 représente une vue en perspective des branches de palier du dispositif illustré sur les figures 1 et 2.

La figure 6 représente une vue latérale d'encore une autre variante de réalisation de l'invention.

Les figures 1 et 2 représentent un dispositif de support de châssis tournant d'installation de filtration à cellules de filtration disposées en carrousel. Le châssis tournant est constitué d'une succession de rails 1 en forme de segments d'anneau agencés l'un derrière l'autre en cercle. Ces anneaux constitués de rails 1 reposent des galets de support 2. Dans l'exemple de réalisation illustré, le galet de support 2 est capable de pivoter autour d'un axe de pivotement 3. Le galet 2 comprend une roue 4 dotée d'une jante 5 en acier ou en fonte, par exemple, qui ici est recouverte d'un bandage en acier 6. On peut évidemment considérer un galet sans bandage ou pourvu d'un bandage en d'autres matières appropriées, par exemple en fonte ou en une matière synthétique appropriée, telle que du polyuréthanne. Le galet peut être utilisé à sec ou avec graissage.

La roue 5 est munie en son centre d'un roulement à billes 7 qui lui permet de tourner librement sur un arbre 8 porté par les branches 9 et 10 d'un palier 11, disposées de part et d'autre du galet. On peut évidemment envisager aussi un arbre qui tourne avec la roue et qui est supporté par les branches du palier de manière à pouvoir pivoter dans celles-ci, par exemple à l'aide de roulements.

A une première extrémité de chacune des branches 9 et 10, celles-ci sont soudées à une plaque d'assise 12, elle-même ancrée dans le sol. A leur extrémité opposée, les branches de palier ont une forme de crochet ouvert vers le haut dans lequel l'arbre 8 peut se loger. Les branches de la forme de réalisation illustrée présentent une forme générale de U couché, ce qui donne à chaque branche des propriétés de flexibilité.

Si, comme illustré sur la figure 1, lorsque le châssis et donc le rail 1 est posé sur le galet 4, l'arbre 8, par lequel passe l'axe de pivotement 3, est situé à une distance h du sol et se trouve donc dans un premier état de flexion résultant du poids du châssis tournant et des cellules de filtration qu'il supporte, dès que le châssis se met à circuler sur les galets, chaque branche peut subir des forces vers le bas variables et donc la hauteur h peut varier, les deux extrémités du U se rapprochant ou s'écartant en fonction de ces forces variables.

Comme on peut le voir sur la figure 3, en traits pleins, les deux branches 9 et 10 du palier sont représentées dans un état de flexion identique et l'axe de pivotement 3 est sensiblement horizontal. Dès le moment où une force F supérieure à la force f, initialement appliquée sur les deux branches 9 et 10, est appliquée uniquement sur la branche 9, cette branche du palier suivant l'invention peut seule passer dans un deuxième état de flexion représenté en traits mixtes sur la figure 3. Un tel déplacement du crochet du palier 9 peut avantageusement être toléré jusqu'à une valeur d'environ 2 mm, ce qui permet une sortie de l'axe de pivotement 3 de l'horizontalité. L'axe peut ainsi former un angle α par rapport à l'horizontale, allant jusqu'à environ 2°.

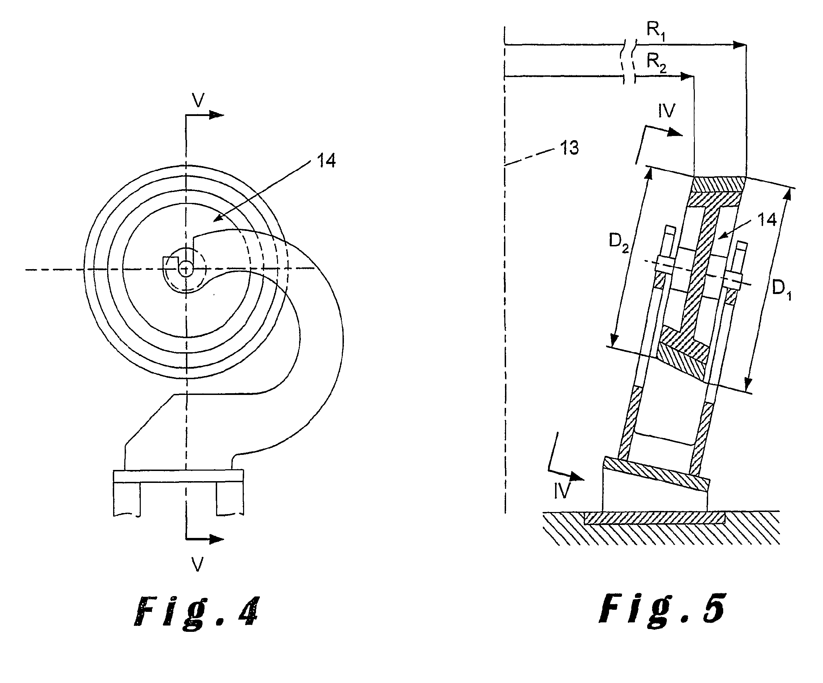

Si dans la forme de réalisation illustrée sur les figures 1 et 2, le galet 2 est cylindrique, on peut évidemment, comme illustré sur les figures 4 et 5, prévoir des galets coniques 14. Ces galets offrent l'avantage que, par rapport à l'axe de rotation 13 du carrousel, il présentent un diamètre $D_1$ à l'extérieur et un diamètre $D_2$ inférieur à $D_1$ à l'intérieur, de façon à obtenir dans toute la mesure du possible un rapport $\dfrac{D_1}{R_1} = \dfrac{D_2}{R_2}$, où $R_1$ et $R_2$ représentent le rayon extérieur du cercle du carrousel passant par le bord supérieur, extérieur du galet et respectivement le rayon intérieur du cercle du carrousel passant par le bord supérieur, intérieur du galet. Ce rapport conditionne en théorie un roulement sans usure. Hormis l'agencement en oblique des branches de palier, le dispositif de support illustré ici est le même que dans la forme de réalisation suivant les figures 1 et 2.

Dans la forme de réalisation illustrée sur la figure 6, on a représenté uniquement une branche de palier. Celle-ci comprend une partie rigide sous la forme d'un montant rigide 15 qui porte l'axe 3 du galet 4 et qui est supporté de manière fixe par un bras de levier 14. Le bras de levier 14 est supporté sur le sol par un palier de pivotement 16 qui permet au bras de levier de pivoter autour d'un axe fixe. A son extrémité opposée, le bras de levier 14 est muni d'un ressort de rappel 17 qui est capable de fléchir sous les forces dirigées vers le bas issues du châssis tournant.

Il doit être entendu que la présente invention n'est en aucune façon limitée aux formes de réalisation décrites ci-dessus et que bien des modifications peuvent y être apportées sans sortir du cadre des revendications annexées.

On pourrait par exemple imaginer que chaque branche de palier soit un bras en porte-à-faux flexible qui, à une extrémité est reliée à une assise fixe, par exemple par un montant, et qui, à une extrémité opposée, porte l'axe de pivotement du galet de manière flexible.

**Revendications**

**1.** Dispositif de support de châssis tournant (1) d'installation de filtration à cellules de filtration disposées en carrousel, comprenant

> - des galets de support (2) qui présentent chacun un axe de pivotement (3) et qui supportent le châssis tournant de manière à permettre une rotation de ce dernier autour d'un axe de rotation (13) du carrousel, et
> - par galet (2), un palier (11) fixe qui supporte le galet de manière à permettre son pivotement, le palier comportant une première branche (9) et une deuxième branche (10) disposées de part et d'autre du galet (2) pour le porter de manière à permettre son pivotement,

> **caractérisé en ce que**, en fonction de forces appliquées sur le galet (2) par le châssis tournant (1), la première branche (9) passe d'un premier état de flexion à un deuxième état de flexion et inversement, indépendamment d'un état de flexion de la deuxième branche, et respectivement la deuxième branche (10) passe d'un premier état de flexion à un deuxième état de flexion et inversement, indépendamment d'un état de flexion de la première branche.

**2.** Dispositif suivant la revendication 1, **caractérisé en ce que** chacune des branches (9, 10) d'un palier présente une première extrémité fixée à une assise (12) et une deuxième extrémité qui porte le galet (2) et qui est située à une distance de l'assise, variable en fonction desdites forces appliquées sur le galet.

**3.** Dispositif suivant la revendication 2, **caractérisé en ce que** chaque branche (9, 10) d'un palier (11) présente une forme générale de U couché dont ladite première extrémité et ladite deuxième extrémité se rapprochent ou s'écartent en fonction desdites forces appliquées sur le galet.

**4.** Dispositif suivant la revendication 1, **caractérisé en ce que** chaque branche d'un palier comprend une première partie rigide (15) qui porte le galet et une deuxième partie (14, 17) qui supporte ladite première partie de manière flexible sur une assise.

**5.** Dispositif suivant la revendication 4, **caractérisé en ce que** la deuxième partie comporte un bras de levier (14), qui est relié à l'assise de manière à pouvoir pivoter autour d'un axe fixe, et un élément de ressort de rappel (17) qui supporte le bras de levier sur l'assise, à distance de l'axe fixe.

**6.** Dispositif suivant la revendication 1, **caractérisé en ce que** chaque branche d'un palier est un b ras en porte-à-faux flexible qui, à une extrémité est reliée à une assise de manière fixe et à une extrémité opposée porte le galet de manière flexible.

**7.** Dispositif suivant l'u ne quelconque des revendications 1 à 6, **caractérisé en ce que** chaque branche de palier porte le galet (2) de manière à permettre un déplacement vertical vers le bas de l'axe de pivotement (3) de l'ordre de 2 mm.

**8.** Dispositif suivant l'une quelconque des revendications 1 à 6, **caractérisé en ce que** l'axe de pivotement (3) du galet est horizontal dans le premier état de flexion des b ranches (9, 10) du palier et **en ce que** chaque branche de palier porte le galet de manière à permettre un basculement de l'axe de pivotement de l'ordre de 2° hors de l'horizontalité.

**9.** Dispositif suivant l'u ne quelconque des revendications 1 à 7, **caractérisé en ce que** les galets sont cylindriques.

**10.** Dispositif suivant l'une quelconque des revendications 1 à 7, **caractérisé en ce que** les galets sont coniques.

**11.** Dispositif suivant l'u ne quelconque des revendications 1 à 9, **caractérisé en ce que** les galets sont munis d'un bandage en fonte, en acier ou en une matière synthétique.

**12.** Dispositif suivant l'une quelconque des revendications 1 à 11, **caractérisé en ce que** le galet comprend un roulement central permettant son pivotement autour de son axe de pivotement.

## Claims

**1.** Device supporting a rotating frame (1) for a filtration installation with filtration cells disposed in a carousel, comprising

> - support rollers (2) that each have a pivot axis (3) and that support the rotating frame so as to allow a rotation of the latter about a rotation axis (13) of the carousel, and
> - per roller (2), a fixed bearing (11) that supports the roller so as to allow its pivoting, the bearing comprising a first arm (9) and a second arm (10) disposed on each side of the roller (2) in order to carry it so as to allow its pivoting,

> **characterised in that**, according to the forces applied to the roller (2) by the rotating frame (1), the first arm (9) passes from first bending state to a second bending state and vice versa independently of a bending state of the second arm, and respectively the second arm (10) passes from a first bending state to a second bending state and vice versa, independently of the bending state of the first arm.

**2.** Device according to claim 1, **characterised in that** each of the arms (9, 10) of a bearing has a first and fixed to a base (12) and a second end that carries the roller (2) and that is situated at a distance from the base, variable according to the said forces applied to the roller.

**3.** Device according to claim 2, **characterised in that** each arm (9, 10) of a bearing (11) has the general shape of a U on its side, the said first end and the said second end of which move closer together or further apart according to the said forces applied to the roller.

**4.** Device according to claim 1, **characterised in that** each arm of a bearing comprises a first rigid part (15) that carries the roller and a second part (14, 17) that supports the said first part in a flexible manner on a base.

**5.** Device according to claim 4, **characterised in that** the second part comprises a lever arm (14) that is connected to the base so as to be able to pivot about a fixed axis and a return spring element (17) that supports the lever arm on the base, at a distance from the fixed axis.

**6.** Device according to claim 1, **characterised in that** each arm of the bearing is a flexible cantilever arm that at one end is connected fixedly to a base and at an opposite end carries the roller in a flexible manner.

**7.** Device according to any one of claims 1 to 6, **characterised in that** each bearing arm carries the roller (2) so as to allow a vertical downward movement of the pivot axis (3) of around 2 mm.

**8.** Device according to any one of claims 1 to 6, **characterised in that** the pivot axis (3) of the roller is horizontal in the first bending state of the arms (9, 10) of the bearing and **in that** each bearing arm carries the roller so as to allow a tilting of the pivot axis of around 2o from the horizontal.

**9.** Device according to any one of claims 1 to 7, **characterised in that** the rollers are cylindrical.

**10.** Device according to any one of claims 1 to 7, **characterised in that** the rollers are conical.

**11.** Device according to any one of claims 1 to 9, **characterised in that** the rollers are provided with a tyre made from cast iron, steel or a synthetic material.

**12.** Device according to any one of claims 1 to 11, **characterised in that** the roller comprises a central roller bearing allowing its pivoting about its pivot axis.

**Patentansprüche**

**1.** Vorrichtung zur Unterstützung eines Rotationsrahmens (1) einer Filteranlage mit Filterzellen, die karussellartig angeordnet sind, umfassend:

   - Stützrollen (2), die jeweils eine Schwenkachse (3) aufweisen und den Rotationsrahmen tragen, so dass eine Rotation dieses letztgenannten um eine Rotationsachse (13) des Karussells möglich ist, und
   - pro Rolle (2) ein festes Lager (11), das die Rolle derart trägt, dass ihr Schwenken möglich ist, wobei das Lager einen ersten Abschnitt (9) und einen zweiten Abschnitt (10) aufweist, die beiderseits der Rolle (2) angeordnet sind, um sie derart zu tragen, dass ihr Schwenken möglich ist,

   **dadurch gekennzeichnet, dass** in Abhängigkeit von den auf die Rolle (2) durch den Rotationsrahmen (1) angelegten Kräften der erste Abschnitt (9) von einem ersten Biegezustand in einen zweiten Biegezustand und umgekehrt unabhängig von einem Biegezustand des zweiten Abschnitts übergeht, bzw. der zweite Abschnitt (10) von einem ersten Biegezustand in einen zweiten Biegezustand und umgekehrt unabhängig von einem Biegezustand des ersten Abschnitts übergeht.

**2.** Vorrichtung nach Anspruch 1, **dadurch gekennzeichnet, dass** jeder der Abschnitte (9, 10) eines Lagers ein erstes Ende, das an einer Basis (12) befestigt ist, und ein zweites Ende aufweist, das die Rolle (2) trägt und sich in einem Abstand zur Basis befindet, der in Abhängigkeit von den auf die Rolle ausgeübten Kräften variabel ist.

**3.** Vorrichtung nach Anspruch 2, **dadurch gekennzeichnet, dass** jeder Abschnitt (9, 10) eines Lagers (11) eine allgemeine Form eines liegenden U aufweist, dessen erstes Ende und zweites Ende sich einander annähern oder voneinander entfernen, je nach den auf die Rolle ausgeübten Kräften.

**4.** Vorrichtung nach Anspruch 1, **dadurch gekennzeichnet, dass** jeder Abschnitt eines Lagers einen ersten starren Teil (15), der die Rolle trägt, und einen zweiten Teil (14, 17), der den ersten Teil auf flexible Weise auf einer Basis trägt, umfasst.

**5.** Vorrichtung nach Anspruch 4, **dadurch gekennzeichnet, dass** der zweite Teil einen Hebelarm (14), der mit der Basis derart verbunden ist, dass er um eine feste Achse schwenken kann, und ein Rückstellfederelement (17) umfasst, das den Hebelarm auf der Basis in einem Abstand zur festen Achse unterstützt.

**6.** Vorrichtung nach Anspruch 1, **dadurch gekennzeichnet, dass** jeder Abschnitt eines Lagers ein flexibler überragender Arm ist, der an einem Ende mit einer Basis fest verbunden ist und an einem gegenüber liegenden Ende die Rolle flexibel trägt.

**7.** Vorrichtung nach einem der Ansprüche 1 bis 6, **dadurch gekennzeichnet, dass** jeder Lagerabschnitt die Rolle (2) derart trägt, dass eine Vertikalverschiebung der Schwenkachse (3) um ungefähr 2 mm nach unten möglich ist.

**8.** Vorrichtung nach einem der Ansprüche 1 bis 6, **dadurch gekennzeichnet, dass** die Schwenkachse (3) der Rolle im ersten Biegezustand der Abschnitte (9, 10) des Lagers horizontal ist, und dass jeder Lagerabschnitt die Rolle derart trägt, dass ein Kippen der Schwenkachse um ungefähr 2° aus der Horizontalen möglich ist.

**9.** Vorrichtung nach einem der Ansprüche 1 bis 7, **dadurch gekennzeichnet, dass** die Rollen zylindrisch sind.

**10.** Vorrichtung nach einem der Ansprüche 1 bis 7, **dadurch gekennzeichnet, dass** die Rollen konisch sind.

**11.** Vorrichtung nach einem der Ansprüche 1 bis 9, **dadurch gekennzeichnet, dass** die Rollen mit einem Reifen aus Gusseisen, Stahl oder Kunststoff versehen sind.

**12.** Vorrichtung nach einem der Ansprüche 1 bis 11, **dadurch gekennzeichnet, dass** die Rolle ein zentrales Rollenlager umfasst, das ihr Schwenken um ihre Schwenkachse ermöglicht.

**Fig.1**

**Fig.2**

EP 1 725 315 B1

Fig. 6

Fig. 3

*Fig.4*

*Fig.5*

**EP 1 725 315 B1**

**RÉFÉRENCES CITÉES DANS LA DESCRIPTION**

**Documents brevets cités dans la description**

- US 3389800 A